# EUROPÄISCHE PATENTSCHRIFT

(11) **EP 3 695 267 B1**
(45) Veröffentlichungstag und Bekanntmachung des Hinweises auf die Patenterteilung: **17.11.2021**
(21) Anmeldenummer: 18778386.5
(22) Anmeldetag: 12.09.2018
(51) Int. Cl.: G02B 27/01

(54) **VERFAHREN ZUM BETREIBEN EINER AM KOPF TRAGBAREN ELEKTRONISCHEN ANZEIGEEINRICHTUNG UND ANZEIGESYSTEM ZUM ANZEIGEN EINES VIRTUELLEN INHALTS**
METHOD FOR OPERATING A HEAD-MOUNTED ELECTRONIC DISPLAY DEVICE AND DISPLAY SYSTEM FOR DISPLAYING A VIRTUAL CONTENT
PROCÉDÉ POUR FAIRE FONCTIONNER UN DISPOSITIF D'AFFICHAGE ÉLECTRONIQUE POUVANT ÊTRE PORTÉ SUR LA TÊTE ET SYSTÈME D'AFFICHAGE POUR AFFICHER UN CONTENU VIRTUEL

(30) Priorität: 12.10.2017 DE 102017218215
(43) Veröffentlichungstag der Anmeldung: 19.08.2020
(73) Patentinhaber: Audi AG, 85045 Ingolstadt (DE)
(72) Erfinder: KÜHNE, Marcus, 92339 Beilngries (DE)
(86) Internationale Anmeldenummer: PCT/EP2018/074612
(87) Internationale Veröffentlichungsnummer: WO 2019/072483

(56) Entgegenhaltungen:
- WO-A1-2016/014877
- DE-A1-102014 006 732
- DE-A1-102014 009 697
- DE-A1-102015 104 511
- US-A1- 2016 124 502
- US-A1- 2017 061 696
- US-A1- 2017 103 574
- US-A1- 2017 278 304
- US-B1- 9 459 692

## Beschreibung

Die Erfindung betrifft ein Verfahren zum Betreiben einer am Kopf tragbaren elektronischen Anzeigeeinrichtung und ein Anzeigesystem zum Anzeigen eines virtuellen Inhalts.

Zukünftig werden voraussichtlich immer mehr Menschen immersive Technologien in ihren Fahrzeugen nutzen, sei es zur Unterstützung während der Wahrnehmung der Fahraufgabe oder auch zur Unterhaltung beziehungsweise Entspannung während der Fahrt. Dabei werden Fahrzeuginsassen voraussichtlich Virtual-Reality- beziehungsweise Augmented-Reality-Technologien nutzen, um zu spielen, Medien zu konsumieren oder zu entspannen. Insbesondere bei unterhaltsamen spielerischen Erfahrungen oder Interaktionen mit anderen virtuellen oder real ebenfalls im Fahrzeug befindlichen Personen ist es wichtig, dass ein jeweiliger Nutzer die ihn in der Realität umgebenden physischen Grenzen des Fahrzeugs kennt. Da diese Grenzen je nach Fahrzeugtyp ganz unterschiedlich sein können, stellt eine Vorab-Bereitstellung derartiger Innenraumdaten einen sehr hohen und kostenintensiven Aufwand dar.

Die Verwendung von Virtual-Reality-Brillen in Fahrzeugen wird beispielsweise in der DE 10 2015 003 882 A1 gezeigt. Der Fokus bei dieser Offenlegungsschrift liegt darin, eine so genannte Motion Sickness beim Träger der Virtual-Reality-Brille zu verhindern. Dies wird dadurch erzielt, dass beispielsweise mittels eines Kamerasystems die Fahrzeugumgebung erfasst und zusätzlich mittels der Virtual-Reality-Brille eingespielt wird.

Auf die Verhinderung der so genannten Motion Sickness fokussiert sich auch die US 2006/0015000 A1. In dem darin vorgeschlagenen Verfahren ist es vorgesehen, die Fahrzeugumgebung mittels einer im Rücksitzbereich angeordneten Anzeigeeinrichtung anzuzeigen, sodass Mitfahrern im Fontbereich nicht übel wird.

In der US9459692 B1 wird vorgeschlagen, die Konturen eines Fahrzeuginnenraums zur Bestimmung von Relativbewegungen zu erfassen.

Schließlich zeigt die DE 10 2014 003 178 A1 noch ein Verfahren zum Betreiben einer Virtual-Reality-Brille während der Fahrt mit einem Fahrzeug. Dabei ist es vorgesehen, zusätzlich zu den virtuellen Inhalten an sich noch ein Bild einer realen Fahrzeugumgebung darzustellen.

Es ist die Aufgabe der vorliegenden Erfindung, ein Verfahren zum Betreiben einer am Kopf tragbaren elektronischen Anzeigeeinrichtung sowie ein Anzeigesystem zum Anzeigen eines virtuellen Inhalts bereitzustellen, mittels welchem Trägern solcher elektronischen Anzeigeeinrichtungen auf besonders einfache Weise die Wahrnehmung von physischen Grenzen innerhalb eines Fahrzeugs kenntlich gemacht werden kann.

Diese Aufgabe wird durch ein Verfahren zum Betreiben einer am Kopf tragbaren elektronischen Anzeigeeinrichtung, sowie durch ein Anzeigesystem zum Anzeigen eines virtuellen Inhalts mit den Merkmalen der unabhängigen Patentansprüche gelöst. Vorteilhafte Ausgestaltungen mit zweckmäßigen und nicht trivialen Weiterbildungen der Erfindung sind in den übrigen Ansprüchen angegeben.

Beim dem erfindungsgemäßen Verfahren zum Betreiben einer am Kopf tragbaren elektronischen Anzeigeeinrichtung, wird mittels einer an der elektronischen Anzeigeeinrichtung angeordneten Erfassungseinrichtung eine Relativbewegung der elektronischen Anzeigeeinrichtung zu einem Fahrzeuginnenraum eines Fahrzeugs ermittelt und entsprechend der ermittelten Relativbewegung eine virtuelle Perspektive eines im Fahrzeuginnenraum befindlichen Trägers der elektronischen Anzeigeeinrichtung auf einen angezeigten virtuellen Inhalt angepasst. Zudem wird mittels der Erfassungseinrichtung eine Kontur des Fahrzeuginnenraums erfasst und eine der Kontur des Fahrzeuginnenraums entsprechende virtuelle Kontur angezeigt.

Mittels der an der elektronischen Anzeigeeinrichtung angeordneten Erfassungseinrichtung erfolgt also erfindungsgemäß ein so genanntes Inside-Out-Tracking. Bei dem Inside-Out-Tracking erfolgt die Erfassung von Bewegungen der elektronischen Anzeigeeinrichtung dadurch, dass die Erfassungseinrichtung an der elektronischen Anzeigeeinrichtung selbst angebracht ist. Die Erfassungseinrichtung ist dazu ausgelegt, eine Umgebung der am Kopf tragbaren elektronischen Anzeigeeinrichtung zu erfassen und dadurch auf Bewegungen der elektronischen Anzeigeeinrichtung relativ zur Umgebung, im konkreten Anwendungsfall also bezüglich des Fahrzeuginnenraums, zu schließen.

Dabei ist es erfindungsgemäß vorgesehen, die für das Inside-Out-Tracking ausgelegte Erfassungseinrichtung zusätzlich noch dafür zu nutzen, die Kontur des Fahrzeuginnenraums zu erfassen, wobei eine der Kontur des Fahrzeuginnenraums entsprechende virtuelle Kontur mittels der am Kopf tragbaren elektronischen Anzeigeeinrichtung angezeigt wird. Mittels der an der elektronischen Anzeigeeinrichtung angebrachten Erfassungseinrichtung ist es also möglich, Geometrien beziehungsweise Strukturen des Fahrzeuginnenraums zu erkennen und innerhalb einer jeweiligen Virtual-Reality- beziehungsweise Augmented-Reality-Anwendung mittels der elektronischen Anzeigeeinrichtung zu implementieren.

Die der erfassten Kontur des Fahrzeuginnenraums entsprechende virtuelle Kontur muss dabei nicht genauso aussehen wie der tatsächliche Fahrzeuginnenraum. Entscheidend ist lediglich, dass die virtuelle Kontur hinsichtlich ihrer Geometrie der erfassten Kontur des Fahrzeuginnenraums entspricht. Mit anderen Worten ist es mittels des erfindungsgemäßen Verfahrens also möglich, dass dem Träger der elektronischen Anzeigeeinrichtung, während er im Fahrzeuginnenraum sitzt, seine Fahrzeugumgebung als eine Art Struktur oder auch Relief mittels der elektronischen Anzeigeeinrichtung zusätzlich zu den an sich bereits angezeigten virtuellen Inhalten dargestellt wird. Unabhängig davon, in was für einem Fahrzeugmodell der Träger der elektronischen Anzeigeeinrichtung also gerade sitzt, ist es mittels des erfindungsgemäßen Verfahrens möglich, dass der Träger der elektronischen Anzeigeeinrichtung jederzeit auch bei aufgesetzter elektronischer Anzeigeeinrichtung die ihn tatsächlich umgebenden physischen Grenzen des Fahrzeugs erkennen kann. Unabhängig davon, ob er mittels der elektronischen Anzeigeeinrichtung mit anderen virtuellen Personen interagiert oder mit real ebenfalls im Fahrzeug befindlichen Personen interagiert, kann er die physischen Grenzen des Fahrzeuginnenraum jederzeit - oder zumindest im Bedarfsfall - trotz aufgesetzter elektronischer Anzeigeeinrichtung erkennen.

Gemäß der Erfindung wird die virtuelle Kontur permanent angezeigt. Der Träger der elektronischen Anzeigeeinrichtung erkennt also jederzeit trotz der aufgesetzten elektronischen Anzeigeeinrichtung, wie weit er von den tatsächlichen physischen Grenzen des Fahrzeuginnenraums entfernt ist. Dadurch kann unter anderem zuverlässig verhindert werden, dass der Träger der elektronischen Anzeigeeinrichtung mit Konturen des Fahrzeuginnenraums kollidiert.

Gemäß einer alternativen vorteilhaften Ausführungsform der Erfindung ist es vorgesehen, dass die virtuelle Kontur erst dann angezeigt wird, wenn der Träger der elektronischen Anzeigeeinrichtung mit einem vorgegebenen Körperteil einen vorgegebenen Abstand zur Kontur des Fahrzeuginnenraums unterschreitet. Bei dem vorgegebenen Körperteil kann es sich beispielsweise um einen Kopf und/oder Hände des Trägers der elektronischen Anzeigeeinrichtung handeln. Bei dieser alternativen vorteilhaften Ausführungsform, bei welchen die virtuelle Kontur erst dann angezeigt wird, wenn der Träger der elektronischen Anzeigeeinrichtung mit dem vorgegebenen Körperteil den vorgegebenen Abstand zur Kontur des Fahrzeuginnenraums unterschreitet, wird eine besonders immersive Darstellung der virtuellen Inhalte unterstützt. Solange der Träger der elektronischen Anzeigeeinrichtung mit dem vorgegebenen Körperteil also weit genug entfernt von der Kontur des Fahrzeuginnenraums ist, wird die virtuelle Kontur, welche der erfassten Kontur des Fahrzeuginnenraums geometrisch entspricht, nicht angezeigt. Sobald der Träger sich mit dem vorgegebenen Körperteil jedoch zu sehr der realen Kontur des Fahrzeuginnenraums nähert, wird die virtuelle Kontur, welche der Kontur des Fahrzeuginnenraums entspricht, mittels der elektronischen Anzeigeeinrichtung angezeigt. Dadurch kann ebenfalls sichergestellt werden, das der Träger der elektronischen Anzeigeeinrichtung nicht mit der realen Kontur des Fahrzeuginnenraums kollidiert.

In weiterer vorteilhafter Ausgestaltung der Erfindung ist es vorgesehen, dass die Erfassungseinrichtung eine auf einer Laufzeitmessung beruhende Sensoreinrichtung aufweist, mittels welcher die Kontur des Fahrzeuginnenraums erfasst wird. Als die auf der Laufzeitmessung beruhende Sensoreinrichtung kann beispielsweise eine Time-of-Flight-Kamera verwendet werden. Durch die Laufzeitmessung ist es auf besonders exakte und zuverlässige Weise möglich, die reale Kontur des Fahrzeuginnraums zu erfassen. Infolgedessen kann die virtuelle Kontur auch zumindest mehr oder weniger 1 zu 1 entsprechend der realen Kontur des Fahrzeuginnenraums generiert und mittels der elektronischen Anzeigeeinrichtung angezeigt werden. Dadurch kann auf besonders zuverlässige Weise verhindert werden, das der Träger der elektronischen Anzeigeeinrichtung mit der realen Kontur des Fahrzeuginnenraums kollidiert. Mit anderen Worten ist es also mittels der Laufzeitmessung auf besonders exakte Weise möglich, die reale Kontur des Fahrzeuginnenraums zu erfassen, sodass der Träger der elektronischen Anzeigeeinrichtung jederzeit bei aufgesetzter elektronischer Anzeigeeinrichtung erkennen kann, wie weit er von der realen Kontur des Fahrzeuginnenraums entfernt ist, indem die besagte virtuelle Kontur - zumindest bei Bedarf - angezeigt wird.

Eine weitere vorteilhafte Ausführungsform der Erfindung sieht vor, dass die Erfassungseinrichtung eine Kamera aufweist, mittels welcher der Fahrzeuginnenraum aufgezeichnet und basierend darauf die Kontur des Fahrzeuginnenraums erfasst wird. Der Vorteil bei der Verwendung einer herkömmlichen Kamera liegt darin, dass diese üblicherweise wesentlich günstiger ist als beispielsweise eine Time-of-Flight-Kamera ist. Bei alleiniger Verwendung der Kamera ist also der Kostenaufwand wesentlich geringer. Alternativ ist aber auch möglich, die Laufzeitmessung und die herkömmliche Kamera zu kombinieren. So ist es beispielsweise bei Bedarf möglich, die virtuelle Kontur tatsächlich auch so anzuzeigen, wie der Fahrzeuginnenraum in der Realität aussieht. Dies kann durch eine Kombination der Laufzeitmessung mit den Kamerabildern erfolgen. Dreidimensionale Daten werden mittels der Laufzeitmessung generiert, wobei die eigentlich Optik betreffenden Daten mittels der herkömmlichen Kamera bereitgestellt werden.

Ferner wird gemäß der Erfindung mittels der elektronischen Anzeigeeinrichtung ein Spiel angezeigt und die der Kontur des Fahrzeuginnenraums entsprechende virtuelle Kontur an eine aktuelle Szene des Spiels angepasst. Steht der Träger der elektronischen Anzeigeeinrichtung innerhalb der mittels der Anzeigeeinrichtung angezeigten virtuellen Umgebung beispielsweise auf einer Brücke, so kann z.B. ein virtuelles Geländer angezeigt werden, welches der erfassten Kontur des Fahrzeuginnenraums z.B der eines Armaturenbretts, entspricht. Das virtuelle Geländer würde also in dem Fall der besagten virtuellen Kontur entsprechen. Abgesehen von der Geometrie kann die optische Anmutung dieses virtuellen Geländers an die Szene des gerade angezeigten Spiels angepasst werden. Genauso können mittels der Anzeigeeinrichtung auch andere virtuelle Inhalte, wie beispielsweise Medien und dergleichen angezeigt werden, wobei die der Kontur des Fahrzeuginnenraums entsprechende virtuelle Kontur an die jeweiligen virtuellen Inhalte angepasst dargestellt wird. Dadurch wird die Immersion beim Anzeigen verschiedenster Inhalte mittels der elektronischen Anzeigeeinrichtung unterstützt beziehungsweise erheblich verbessert.

Das erfindungsgemäße Anzeigesystem zum Anzeigen eines virtuellen Inhalts umfasst eine am Kopf tragbaren elektronischen Anzeigeeinrichtung, eine an der elektronischen Anzeigeeinrichtung angeordnete Erfassungseinrichtung, welche dazu ausgelegt ist, eine Relativbewegung der elektronischen Anzeigeeinrichtung zu einem Fahrzeuginnenraum eines Fahrzeugs zu ermitteln, und eine Steuereinrichtung, welche dazu eingerichtet ist, entsprechend der ermittelten Relativbewegung eine virtuelle Perspektive eines im Fahrzeuginnenraum befindlichen Trägers der elektronischen Anzeigeeinrichtung auf den angezeigten virtuellen Inhalt anzupassen. Die Erfassungseinrichtung ist zudem dazu ausgelegt, eine Kontur des Fahrzeuginnenraums zu erfassen, wobei die Steuereinrichtung dazu eingerichtet ist, die elektronische Anzeigeeinrichtung zum Anzeigen einer der Kontur des Fahrzeuginnenraums entsprechenden virtuellen Kontur anzusteuern. Vorteilhafte Ausgestaltungen des erfindungsgemäßen Verfahrens sind als vorteilhafte Ausgestaltungen des erfindungsgemäßen Anzeigesystems und umgekehrt anzusehen, wobei das Anzeigesystem insbesondere Mittel zur Durchführung der Verfahrensschritte aufweist. Bei der elektronischen Anzeigeeinrichtung kann es sich beispielsweise um eine Virtual-Reality-Brille oder auch um eine Augmented-Reality-Brille handeln.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen

Die Zeichnung zeigt in:
- Fig. 1: eine schematische Darstellung eines Anzeigesystems zum Anzeigen eines virtuellen Inhalts, wobei das Anzeigesystem eine am Kopf tragbare elektronische Anzeigeeinrichtung, eine an der elektronischen Anzeigeeinrichtung angeordnete Erfassungseinrichtung und eine Steuereinrichtung aufweist;
- Fig. 2: eine schematische Seitenansicht eines Kraftfahrzeugs, in welchem ein Träger der elektronischen Anzeigeeinrichtung sitzt; und
- Fig. 3: eine schematische Darstellung eines mittels der elektronischen Anzeigeeinrichtung angezeigten virtuellen Inhalts.

In den Figuren sind gleiche oder funktionsgleiche Elemente mit gleichen Bezugszeichen versehen worden.

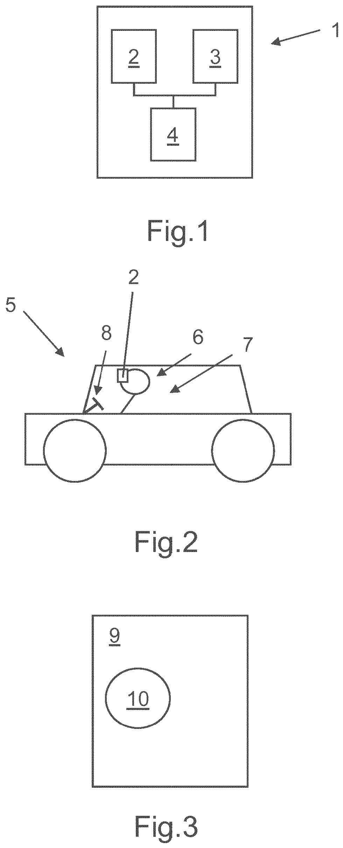

Ein Anzeigesystems 1 zum Anzeigen eines virtuellen Inhalts ist in einer schematischen Darstellung in Fig. 1 gezeigt. Das Anzeigesystems 1 umfasst eine am Kopf tragbare elektronische Anzeigeeinrichtung 2, bei der es sich beispielsweise um eine Virtual-Reality-Brille oder auch um eine Augmented-Reality-Brille handeln kann. Daneben weist das Anzeigesystem 1 noch eine an der elektronischen Anzeigeeinrichtung 2 angeordnete Erfassungseinrichtung 3 auf. Die Erfassungseinrichtung 3 kann beispielsweise eine Time-of-Flight-Kamera aufweisen, wobei die Erfassungseinrichtung 3 alternativ oder zusätzlich beispielsweise auch eine herkömmliche Kamera aufweisen kann. Zudem weist das Anzeigesystem 1 noch eine Steuereinrichtung 4 auf, welche datentechnisch mit der elektronischen Anzeigeeinrichtung 2 und der Erfassungseinrichtung 3 verbunden ist.

In Fig. 2 ist ein Fahrzeug 5 in einer schematischen Seitenansicht gezeigt, wobei ein Träger 6 die elektronische Anzeigeeinrichtung 2 während der Fahrt mit dem Fahrzeug 5 aufgesetzt hat. Mittels der an der elektronischen Anzeigeeinrichtung 2 angeordneten, und hier nicht näher dargestellten Erfassungseinrichtung 3 wird eine Relativbewegung der elektronischen Anzeigeeinrichtung 2 zu einem Fahrzeuginnenraum 7 des Fahrzeugs 5 ermittelt. Entsprechend der ermittelten Relativbewegung wird eine virtuelle Perspektive des im Fahrzeuginnenraum 7 befindlichen Trägers 6 der elektronischen Anzeigeeinrichtung 2 auf einen mittels der elektronischen Anzeigeeinrichtung 2 angezeigten virtuellen Inhalt 9 angepasst. Mit anderen Worten dient die Erfassungseinrichtung 3 also zum sogenannten Inside-Out-Tracking der elektronischen Anzeigeeinrichtung 2.

Der besagte virtuelle Inhalt 9 ist stark schematisiert in Fig. 3 dargestellt. Mittels der Erfassungseinrichtung 3 wird zudem eine Kontur 8, schematisch hier durch ein Lenkrad angedeutet, des Fahrzeuginnenraums 7 erfasst, wobei eine der Kontur 8 des Fahrzeuginnenraums 7 entsprechende virtuelle Kontur 10 zusätzlich zum eigentlichen virtuellen Inhalt 9 angezeigt wird.

Dabei kann es vorgesehen sein, dass die virtuelle Kontur 10 permanent angezeigt wird. Alternativ ist es aber auch möglich, dass die virtuelle Kontur 10 erst dann angezeigt wird, wenn der Träger 6 der elektronischen Anzeigeeinrichtung 2 beispielsweise seinen Kopf oder auch seine Hände an die reale Kontur 8 des Fahrzeuginnenraums 7 nah genug angenähert hat. Beispielsweise kann ein bestimmter Abstand vorgegeben werden, wobei sobald erfasst wird, dass dieser Abstand zur realen Kontur 8 des Fahrzeuginnenraums 7 unterschritten worden ist, die virtuelle Kontur 10, welche geometrisch der realen Kontur 8 des Fahrzeuginnenraums 7 entspricht, angezeigt wird. Unabhängig davon, ob die virtuelle Kontur 10 permanent angezeigt wird oder nur bedarfsweise angezeigt wird, ist es wesentlich, dass die virtuelle Kontur 10 hinsichtlich ihrer Struktur beziehungsweise hinsichtlich ihrer Geometrie und ihrer Abmaße der realen Kontur 8 des Fahrzeuginnenraums 7 entspricht. Ansonsten muss die eingeblendete virtuelle Kontur 10 rein optisch nicht wie die reale Kontur 8 des Fahrzeuginnenraums 7 aussehen, sondern kann ganz im Gegenteil auch ganz anders aussehen.

Beispielsweise ist es möglich, dass während der Fahrt mit dem Fahrzeug 5 mittels der elektronischen Anzeigeeinrichtung 2 ein Spiel angezeigt wird, wobei das Spiel in Form des virtuellen Inhalts 9 angezeigt wird. Eine der realen Kontur 8 des Fahrzeuginnenraums 7 entsprechende virtuelle Kontur 10 wird dabei an die aktuelle Szene des Spiels angepasst. Das heißt also, dass die eingeblendete virtuelle Kontur 10 gar nicht wie der Fahrzeuginnenraum 7 aussieht, stattdessen entspricht die virtuelle Kontur 10 lediglich hinsichtlich der Struktur beziehungsweise der Geometrie der realen Kontur 8 des Fahrzeuginnenraums 7, wobei die ansonsten optische Anmutung der virtuellen Kontur 10 an das gerade angezeigte beziehungsweise gespielte Spiel angepasst wird, welches mittels der elektronischen Anzeigeeinrichtung 2 angezeigt wird.

Mittels der elektronischen Anzeigeeinrichtung 2 kann sich der Träger 6 also beliebige virtuelle Inhalte anzeigen lassen, wobei permanent oder bei Bedarf für den Träger 6 mittels der elektronischen Anzeigeeinrichtung 2 die reale Kontur 8 des Fahrzeuginnenraums 7 durch Einblendung der virtuellen Kontur 10 kenntlich gemacht wird.

Der Erfassungseinrichtung 3 des Anzeigesystems 1 kommt also eine Doppelfunktionalität zu. Erstens dient die Erfassungseinrichtung 3 dazu, ein so genanntes Positional Tracking der elektronischen Anzeigeeinrichtung 2 durch das bereits erwähnte Inside-Out-Tracking vorzunehmen. Zweitens übernimmt die Erfassungseinrichtung 3 zusätzlich noch die Funktion, die reale Kontur 8 des Fahrzeuginnenraums 7 zu erfassen, sodass in der beschriebenen Weise mittels der elektronischen Anzeigeeinrichtung 2 noch die besagte virtuelle Kontur 10 angezeigt werden kann, welche der Kontur 8 des Fahrzeuginnenraums 7 entspricht.

Der Träger 6 der elektronischen Anzeigeeinrichtung 2 erkennt also trotz aufgesetzter elektronischer Anzeigeeinrichtung 2 jederzeit - zumindest bei Bedarf, also bei entsprechend starker Annäherung - die ihn umgebenden physischen Grenzen des Fahrzeugs 5. Zusätzlich zu der eigentlichen Erfassung der realen Kontur 8 des Fahrzeuginnenraums 7 kann die Erfassungseinrichtung 3 vorzugsweise auch noch beispielsweise weitere hier nicht dargestellte Fahrzeuginsassen erfassen, wobei es in dem Zusammenhang auch noch vorgesehen sein kann, dass die elektronische Anzeigeeinrichtung 2 den erfassten Fahrzeuginsassen entsprechende virtuelle Konturen ebenfalls noch anzeigt. In dem Fall kann sogar auch noch vermieden werden, dass der Träger 6 der elektronischen Anzeigeeinrichtung 2 nicht nur mit der realen Kontur 8 des Fahrzeuginnenraums 7 sondern auch mit anderen Fahrzeuginsassen kollidiert, wenn er die elektronische Anzeigeeinrichtung 2 aufgesetzt hat.

## Patentansprüche

1. Verfahren zum Betreiben einer am Kopf tragbaren elektronischen Anzeigeeinrichtung (2), bei welchem mittels einer an der elektronischen Anzeigeeinrichtung (2) angeordneten Erfassungseinrichtung (3) eine Relativbewegung der elektronischen Anzeigeeinrichtung (2) zu einem Fahrzeuginnenraum (7) eines Fahrzeugs (5) ermittelt und entsprechend der ermittelten Relativbewegung eine virtuelle Perspektive eines im Fahrzeuginnenraum (7) befindlichen Trägers (6) der elektronischen Anzeigeeinrichtung (2) auf einen angezeigten virtuellen Inhalt (9) angepasst wird, wobei zudem mittels der Erfassungseinrichtung (3) eine Kontur (8) des Fahrzeuginnenraums (7) erfasst wird,
wobei als die elektronische Anzeigeeinrichtung (2) eine Virtual-Reality-Brille verwendet wird,
**dadurch gekennzeichnet,**
**dass** eine der Kontur (8) des Fahrzeuginnenraums (7) entsprechende virtuelle Kontur (10) angezeigt wird, und mittels der elektronischen Anzeigeeinrichtung (2) ein Spiel angezeigt und die der Kontur (8) des Fahrzeuginnenraums (7) entsprechende virtuelle Kontur (10) an eine aktuelle Szene des Spiels angepasst wird, wobei die virtuelle Kontur (10) permanent angezeigt wird.

2. Verfahren nach Anspruch 1,
**dadurch gekennzeichnet, dass**
die Erfassungseinrichtung (3) eine auf einer Laufzeitmessung beruhende Sensoreinrichtung aufweist, mittels welcher die Kontur (8) des Fahrzeuginnenraums (7) erfasst wird.

3. Verfahren nach Anspruch 2,
**dadurch gekennzeichnet, dass**
als die auf der Laufzeitmessung beruhende Sensoreinrichtung eine Time-of-Flight-Kamera verwendet wird.

4. Verfahren nach einem der vorhergehenden Ansprüche,
**dadurch gekennzeichnet, dass**
die Erfassungseinrichtung (3) eine Kamera aufweist, mittels welcher der Fahrzeuginnenraum (7) aufgezeichnet und basierend darauf die Kontur (8) des Fahrzeuginnenraums (7) erfasst wird.

5. Anzeigesystem (1) zum Anzeigen eines virtuellen Inhalts (9), mit einer am Kopf tragbaren elektronischen Anzeigeeinrichtung (2), einer an der elektronischen Anzeigeeinrichtung (2) angeordneten Erfassungseinrichtung (3), welche dazu ausgelegt ist, eine Relativbewegung der elektronischen Anzeigeeinrichtung (2) zu einem Fahrzeuginnenraum (7) eines Fahrzeugs (5) zu ermitteln, und mit einer Steuereinrichtung (4), welche dazu eingerichtet ist, entsprechend der ermittelten Relativbewegung eine virtuelle Perspektive eines im Fahrzeuginnenraum (7) befindlichen Trägers (6) der elektronischen Anzeigeeinrichtung (2) auf den angezeigten virtuellen Inhalt (9) anzupassen, wobei die Erfassungseinrichtung (3) zudem dazu ausgelegt ist, eine Kontur (8) des Fahrzeuginnenraums (7) zu erfassen, wobei
die elektronische Anzeigeeinrichtung (2) eine Virtual-Reality-Brille ist,
**dadurch gekennzeichnet,**
**dass** die Steuereinrichtung (4) dazu eingerichtet ist, die elektronische Anzeigeeinrichtung (2) zum Anzeigen einer der Kontur (8) des Fahrzeuginnenraums (7) entsprechenden virtuellen Kontur (10) anzusteuern, wobei das Anzeigesystem (1) dazu eingerichtet ist, mittels der elektronischen Anzeigeeinrichtung (2) ein Spiel anzuzeigen und die der Kontur (8) des Fahrzeuginnenraums (7) entsprechende virtuelle Kontur (10) an eine aktuelle Szene des Spiels anzupassen sowie die virtuelle Kontur (10) permanent anzuzeigen.

## Claims

1. Method for operating an electronic display apparatus (2) that is wearable on the head, in which a relative movement of the electronic display apparatus (2) in relation to a vehicle interior (7) of a vehicle (5) is ascertained by a detection apparatus (3) arranged on the electronic display apparatus (2) and a virtual perspective of a wearer (6) of the electronic display apparatus (2), the wearer being located in the vehicle interior (7), is adapted to displayed virtual content (9) in accordance with the relative movement ascertained, wherein a contour (8) of the vehicle interior (7) is also detected by the detection apparatus (3), wherein a pair of virtual-reality glasses is used as the electronic display apparatus (2),
**characterised in that**
a virtual contour (10) corresponding to the contour (8) of the vehicle interior (7) is displayed, and a game is displayed by means of the electronic display apparatus (2) and the virtual contour (10) corresponding to the contour (8) of the vehicle interior (7) is adapted to a present scene of the game, wherein the virtual contour (10) is continually displayed.

2. Method according to claim 1,
**characterised in that**
the detection apparatus (3) has a sensor apparatus which is based on a runtime measurement and by means of which the contour (8) of the vehicle interior (7) is determined.

3. Method according to claim 2,
**characterised in that**
a time-of-flight camera is used as the sensor apparatus based on the runtime measurement.

4. Method according to any of the preceding claims,
**characterised in that**
the detection apparatus (3) has a camera by means of which the vehicle interior (7) is recorded, and based on this the contour (8) of the vehicle interior (7) is detected.

5. Display system (1) for displaying virtual content (9), having an electronic display apparatus (2) that is wearable on the head, a detection apparatus (3) that is arranged on the electronic display apparatus (2) and which is designed to ascertain a relative movement of the electronic display apparatus (2) in relation to a vehicle interior (7) of a vehicle (5), and having a control apparatus (4) which is designed to adapt a virtual perspective of a wearer (6) of the electronic display apparatus (2), the wearer being located in the vehicle interior (7), to the displayed virtual content (9) in accordance with the relative movement ascertained, wherein the detection apparatus (3) is also designed to detect a contour (8) of the vehicle interior (7), wherein the electronic display apparatus (2) is a pair of virtual-reality glasses,
**characterised in that**
the control apparatus (4) is designed to control the electronic display apparatus (2) to display a virtual contour (10) corresponding to the contour (8) of the vehicle interior (7), wherein the display system (1) is designed to display a game by means of the electronic display apparatus (2) and to adapt the virtual contour (10) corresponding to the contour (8) of the vehicle interior (7) to a present scene of the game, and to continually display the virtual contour (10).

## Revendications

1. Procédé pour faire fonctionner un dispositif d'affichage électronique (2) pouvant être porté sur la tête, selon lequel un mouvement relatif du dispositif d'affichage électronique (2) par rapport à un habitacle de véhicule (7) d'un véhicule (5) est déterminé au moyen d'un dispositif de détection (3) disposé sur le dispositif d'affichage électronique (2), et une perspective virtuelle d'un porteur (6) du dispositif d'affichage électronique (2), se trouvant dans l'habitacle de véhicule (7), est adaptée à un contenu virtuel affiché (9) en fonction du mouvement relatif déterminé, dans lequel un contour (8) de l'habitacle de véhicule (7) est également détecté au moyen du dispositif de détection (3),
dans lequel des lunettes de réalité virtuelle sont utilisées en tant que dispositif d'affichage électronique (2),
**caractérisé en ce qu'**
un contour virtuel (10) correspondant au contour (8) de l'habitacle de véhicule (7) est affiché, et un jeu est affiché au moyen du dispositif d'affichage électronique (2), et le contour virtuel (10) correspondant au contour (8) de l'habitacle de véhicule (7) est adapté à une scène actuelle du jeu, dans lequel le contour virtuel (10) est affiché en permanence.

2. Procédé selon la revendication 1,
**caractérisé en ce que**,
le dispositif de détection (3) présente un dispositif de détection basé sur une mesure de temps de propagation, au moyen duquel le contour (8) de l'habitacle de véhicule (7) est détecté.

3. Procédé selon la revendication 2
**caractérisé en ce qu'**
une caméra à temps de vol est utilisée en tant que dispositif de détection sur la base de la mesure du temps de propagation.

4. Procédé selon l'une des revendications précédentes,
**caractérisé en ce que**,
le dispositif de détection (3) présente une caméra au moyen de laquelle l'habitacle de véhicule (7) est enregistré et à partir de laquelle le contour (8) de l'habitacle de véhicule (7) est détecté.

5. Système d'affichage (1) pour afficher un contenu virtuel (9), comprenant un dispositif d'affichage électronique (2) pouvant être porté sur la tête, un dispositif de détection (3) agencé sur le dispositif d'affichage électronique (2) et qui est conçu pour déterminer un mouvement relatif du dispositif d'affichage électronique (2) par rapport à un habitacle de véhicule (7) d'un véhicule (5), et comprenant un dispositif de commande (4) qui est conçu pour adapter, en fonction du mouvement relatif déterminé, une perspective virtuelle d'un porteur (6) du dispositif d'affichage électronique (2), se trouvant dans l'habitacle de véhicule (7), au contenu virtuel affiché (9), le dispositif de détection (3) étant également conçu pour détecter un contour (8) de l'habitacle de véhicule (7), dans lequel
le dispositif d'affichage électronique (2) est une paire de lunettes de réalité virtuelle,
**caractérisé en ce que**
le dispositif de commande (4) est conçu pour commander le dispositif d'affichage électronique (2) pour afficher un contour virtuel (10) correspondant au contour (8) de l'habitacle de véhicule (7), dans lequel le système d'affichage (1) est conçu pour afficher un jeu au moyen du dispositif d'affichage électronique (2) et pour adapter le contour virtuel (10) correspondant au contour (8) de l'habitacle de véhicule (7) à une scène actuelle du jeu et pour afficher de manière permanente le contour virtuel (10).
